(19) Europäisches Patentamt
European Patent Office
Office européen des brevets

(11) **EP 1 548 418 B1**

(12) **FASCICULE DE BREVET EUROPEEN**

(45) Date de publication et mention
de la délivrance du brevet:
**24.01.2007 Bulletin 2007/04**

(51) Int Cl.:
*G01L 27/00* (2006.01)    *F02B 77/08* (2006.01)
*G01L 23/10* (2006.01)

(21) Numéro de dépôt: **04292733.5**

(22) Date de dépôt: **18.11.2004**

(54) **Système de calibrage d'une chaîne d'acquisition de la pression dans un cylindre de moteur Diesel de véhicule automobile**

Vorrichtung zur Kalibrierung einer Druck-Messkette in einem Zylinder eines Kraftfahrzeugdieselmotors

Calibration system of the pressure measuring chain in a automotive vehicle Diesel engine cylinder

(84) Etats contractants désignés:
**AT BE BG CH CY CZ DE DK EE ES FI FR GB GR HU IE IS IT LI LU MC NL PL PT RO SE SI SK TR**

(30) Priorité: **24.11.2003 FR 0313755**

(43) Date de publication de la demande:
**29.06.2005 Bulletin 2005/26**

(73) Titulaires:
- **Peugeot Citroën Automobiles S.A.**
  **78140 Vélizy Villacoublay (FR)**
- **Delphi Technologies, Inc.**
  **Troy, MI 48098 (US)**

(72) Inventeurs:
- **Vermonet, Claire**
  **75116 Paris (FR)**
- **Meissonnier, Guillaume**
  **41190 Landes le Gaulois (FR)**
- **Lorret, Cédric**
  **75011 Paris (FR)**
- **Vespasien, Jean-Marie**
  **92250 La Garenne Colombes (FR)**

(74) Mandataire: **Habasque, Etienne J. Jean-François et al**
**Cabinet Lavoix**
**2, Place d'Estienne d'Orves**
**75441 Paris Cédex 09 (FR)**

(56) Documents cités:
**EP-A- 0 399 069        DE-A- 10 028 885**
**US-A- 4 944 271**

- **PATENT ABSTRACTS OF JAPAN vol. 009, no. 262 (P-398), 19 octobre 1985 (1985-10-19) & JP 60 111935 A (NISSAN JIDOSHA KK), 18 juin 1985 (1985-06-18)**

EP 1 548 418 B1

**Description**

La présente invention a pour objet un système de calibrage d'une chaîne d'acquisition de la pression dans un cylindre d'un moteur Diesel pour véhicule automobile.

Plus particulièrement, la présente invention se rapporte au calibrage d'une chaîne d'acquisition de la pression dans un cylindre de moteur Diesel du type pourvu d'un circuit de recirculation des gaz d'échappement et d'un turbocompresseur.

Il est connu des systèmes qui utilisent des informations relatives à la pression dans les cylindres pour commander ou diagnostiquer l'état de fonctionnement d'un moteur Diesel. La précision de la commande ou du diagnostic dépend de la précision de la chaîne d'acquisition de la pression dans les cylindres.

De manière classique, l'acquisition de la pression dans un cylindre associe un capteur de pression cylindre et des moyens de conditionnement. Le capteur comprend un élément actif qui constitue l'élément sensible à la grandeur physique mesurée. Cependant, de manière générale, le signal délivré par le capteur nécessite d'être traité afin d'obtenir un signal dit de « mesure » qui est significatif de la grandeur physique mesurée. En effet, par exemple, lorsque l'élément actif du capteur est un élément piézoélectrique sensible à une déformation qu'il subit, le signal qu'il délivre appartient à une plage de valeurs de signal de déformation. Les moyens de conditionnement sont alors adaptés pour mettre en forme ce signal et pour faire correspondre cette plage de valeurs de déformation à une plage de valeurs de pression par l'utilisation de paramètres de conditionnement.

Il est connu des procédés de calibrage consistant à obtenir la correspondance entre la plage de valeurs de déformation et la plage de valeurs de pression, c'est-à-dire déterminer des valeurs de paramètres de conditionnement, pour une famille de capteurs d'un même modèle. Cette correspondance, déterminée par exemple par le constructeur du capteur, ou par des tests effectués en sortie d'usine sur un échantillon de capteurs montés sur des véhicules automobiles, est alors mémorisée dans les moyens de conditionnement de façon permanente tout au long de la vie du véhicule automobile.

Or les caractéristiques des capteurs sont soumises à une dispersion significative de leurs valeurs.

Ainsi, les capteurs issus d'une production de masse présentent une incertitude sur leur sensibilité qui peut varier fortement d'un capteur à un autre, ce qui a pour conséquence une incertitude significative pour un capteur particulier lorsque les valeurs des paramètres de conditionnement ont été déterminées pour une famille de capteurs.

De plus le capteur connaît au cours de sa vie des dérives de ces caractéristiques, du fait par exemple de l'évolution de son état d'usure. Ainsi, au bout d'un certain temps, les valeurs initiales des paramètres de conditionnement ne sont plus adaptées et l'erreur de mesure résultante est incertaine.

On connaît du document EP-A-0 399 069 un système de calibrage selon le préambule de la revendication 1. La présente invention a pour but de résoudre le problème susmentionné en proposant un système de calibrage automatique du signal délivré par un capteur de pression cylindre d'un moteur Diesel qui soit capable de calibrer spécifiquement le signal délivré par le capteur de façon robuste vis-à-vis des incertitudes sur les caractéristiques du capteur.

A cet effet la présente invention a pour objet un système de calibrage d'une chaîne d'acquisition de la pression dans un cylindre d'un moteur Diesel pour véhicule automobile, du type comportant un capteur de pression cylindre associé au cylindre et des moyens de conditionnement du signal délivré par le capteur en fonction de paramètres de conditionnement, caractérisé en ce qu'il comprend :

- des moyens de recueil du signal délivré par le capteur de pression cylindre ;
- une unité de traitement d'informations adaptée pour déterminer les valeurs des paramètres de conditionnement en fonction d'un modèle thermodynamique polytropique de l'évolution de la pression dans le cylindre, d'une pression de référence de la phase de compression pure du cycle du cylindre et du signal délivré par le capteur de pression recueilli par les moyens de recueil ; et
- des moyens de modification des valeurs des paramètres de conditionnement dans la chaîne d'acquisition en fonction des valeurs des paramètres de conditionnement déterminées par l'unité de traitement d'informations.

Selon d'autres caractéristiques, le système est caractérisé en ce que :

- l'unité de traitement d'information comporte des moyens de détermination adaptés pour déterminer la valeur des paramètres de conditionnement en fonction de valeurs de pression dans la chambre de combustion d'un modèle polytropique de compression pure du cycle du cylindre selon la relation :

$$P(\theta) = P_0 \left( \frac{V_0}{V(\theta)} \right)^{\gamma}$$

où $\theta$ est une valeur de l'angle vilebrequin du cylindre, $V_0$ est le volume de la chambre de combustion du cylindre pour une valeur prédéterminée de l'angle vilebrequin de la phase de compression pure du cycle du cylindre, $P_0$ est une pression de référence prédéterminée dans la chambre de combustion pour la valeur prédéterminée de l'angle vilebrequin, $\gamma$ est un coefficient polytropique, $V(\theta)$ est le volume de la chambre de combustion pour la valeur de l'angle vilebrequin du cylindre $\theta$, et $P(\theta)$ est la pression dans la chambre de combustion pour la valeur de l'angle vilebrequin du cylindre $\theta$ ;

- les moyens de détermination sont adaptés pour déterminer les paramètres de conditionnement d'un modèle de conditionnement du signal délivré par le capteur de pression dans le cylindre selon la relation :

$$P_{mes} = A \times U + P_{offset}$$

où U est le signal délivré par le capteur de pression, $P_{offset}$ est un décalage, A est un gain, et $P_{mes}$ est la pression cylindre mesurée délivrée par les moyens de conditionnement ;

- les moyens de détermination sont adaptés pour déterminer le gain A et le décalage $P_{offset}$ des moyens de conditionnement selon les relations :

$$A = \frac{1}{M} \sum_{j=1}^{M} P_0(j) * \frac{\left(\dfrac{V_0}{\frac{1}{N}\sum_{i=1}^{N} V(\theta_2^i)}\right)^{\gamma} - \left(\dfrac{V_0}{\frac{1}{Q}\sum_{k=1}^{Q} V(\theta_1^k)}\right)^{\gamma}}{\frac{1}{N}\sum_{i=1}^{N} U(\theta_2^i, j) - \frac{1}{Q}\sum_{k=1}^{Q} U(\theta_1^k, j)}$$

$$P_{offset} = P_0(j) * \frac{\left(\dfrac{V_0}{\frac{1}{R}\sum_{i=1}^{R} V(\theta_3^i)}\right)^{\gamma} * \frac{1}{S}\sum_{k=1}^{S} U(\theta_4^k, j) - \left(\dfrac{V_0}{\frac{1}{S}\sum_{k=1}^{S} V(\theta_4^k)}\right)^{\gamma} * \frac{1}{R}\sum_{i=1}^{R} U(\theta_3^i, j)}{\frac{1}{S}\sum_{k=1}^{S} U(\theta_4^k, j) - \frac{1}{R}\sum_{i=1}^{R} U(\theta_3^i, j)}$$

où :

- M, N, Q, R et S sont des nombres prédéterminés;

- $\left\{\theta_1^k ; k = 1, ..., Q\right\}$, $\left\{\theta_2^i ; i = 1, ..., N\right\}$, $\left\{\theta_3^i ; i = 1, ..., R\right\}$, et $\left\{\theta_4^k ; k = 1, ..., S\right\}$ sont des ensembles prédéterminés de valeurs d'angle vilebrequin compris respectivement dans une première, seconde, troisième et quatrième fenêtre de valeurs d'angle vilebrequin de la phase de compression pure du cycle ;

- $\left\{V(\theta_1^k); k = 1, ..., Q\right\}$, $\left\{V(\theta_2^i); i = 1, ..., N\right\}$, $\left\{V(\theta_3^i); i = 1, ..., R\right\}$, et $\left\{V(\theta_4^k); k = 1, ..., S\right\}$ sont les ensembles de valeurs du volume de la chambre de combustion pour les ensembles des valeurs d'angle vilebrequin compris dans la première, seconde, troisième et quatrième fenêtre de la phase de compression pure du cycle du cylindre respectivement ;

-   $\left\{ U(\theta_1^k, j); k = 1,...,Q \right\}$, $\quad$ $\left\{ U(\theta_2^i, j); i = 1,...,N \right\}$, $\quad$ $\left\{ U(\theta_3^i, j); i = 1,...,R \right\}$, et

$\left\{ U(\theta_4^k, j); k = 1,...,S \right\}$ sont les ensembles de valeurs du signal délivré par le capteur de pression cylindre lors du $j^{ème}$ cycle du cylindre pour les ensembles de valeurs d'angle vilebrequin compris dans la première, seconde, troisième et quatrième fenêtre de la phase de compression pure du cycle du cylindre respectivement; et

-   $P_0(j)$ est la pression de référence pour le $j^{ème}$ cycle du cylindre ;

-   les valeurs $\theta_1^i$ et $\theta_3^i$ sont des valeurs de l'angle vilebrequin du début de la phase de compression pure du cycle du cylindre, et les valeurs $\theta_2^i$ et $\theta_4^k$ sont des valeurs de l'angle vilebrequin de la fin de la phase de compression pure du cycle du cylindre ;

-   chacune des valeurs de l'angle vilebrequin $\theta_1^k$, $\theta_2^i$, $\theta_3^i$, et $\theta_4^k$ est déterminée pour optimiser le rapport signal sur bruit du signal délivré par le capteur de pression pour la valeur de l'angle vilebrequin ;

-   le moteur est équipé de moyens de recirculation des gaz d'échappement raccordé à un turbocompresseur, et en ce que l'unité de traitement d'informations comprend des moyens de détermination de la pression de référence $P_0$ en fonction de la pression de suralimentation en sortie du turbocompresseur ;

-   les moyens de détermination de la pression de référence $P_0$ sont raccordés aux moyens de détermination, et sont adaptés pour déterminer la pression de référence $P_0$ selon la relation:

$$P_0 = \alpha \times P_{sural}$$

où $\alpha$ est une valeur d'un coefficient de remplissage et $P_{sural}$ est une valeur de la pression de suralimentation en sortie du turbocompresseur pour l'angle vilebrequin du cylindre correspondant au point mort bas du cycle du cylindre ;

-   l'unité de traitement d'informations comprend des moyens de sélection de la valeur du coefficient de remplissage en fonction du type du cylindre et de la valeur du régime du moteur ;

-   l'unité de traitement d'information comprend des moyens de déclenchement raccordés aux moyens de détermination adaptés pour déclencher la détermination du gain du modèle de conditionnement en fonction d'une loi prédéterminée de déclenchement de la détermination du gain du modèle de conditionnement ;

-   les moyens de déclenchement sont adaptés pour déclencher la détermination du gain du modèle de conditionnement lorsque le véhicule automobile a parcouru un nombre de kilomètres depuis la détermination précédente du gain du modèle de conditionnement supérieur ou égal à une valeur de seuil prédéterminée de kilomètres ;

-   les moyens de déclenchement sont adaptés pour déclencher la détermination du gain du modèle de conditionnement lorsqu'il s'est écoulé une durée depuis la détermination précédente du gain du modèle de conditionnement supérieure ou égale à une valeur de seuil prédéterminée de durée ;

-   les moyens de détermination sont adaptés pour déterminer en continu le décalage du modèle de conditionnement ; et

-   le capteur de pression est un capteur adapté pour mesurer une déformation de la structure du moteur.

La présente invention sera mieux comprise à la lecture de la description qui va suivre, donnée à titre d'exemple, et prise en relation avec les dessins annexés dans lesquels :

-   la figure 1 est une vue schématique d'un cylindre de moteur Diesel associé à une chaîne d'acquisition de la pression dans le cylindre calibrée par un système de calibrage selon l'invention ; et

-   la figure 2 est un organigramme du fonctionnement d'un système de calibrage selon l'invention.

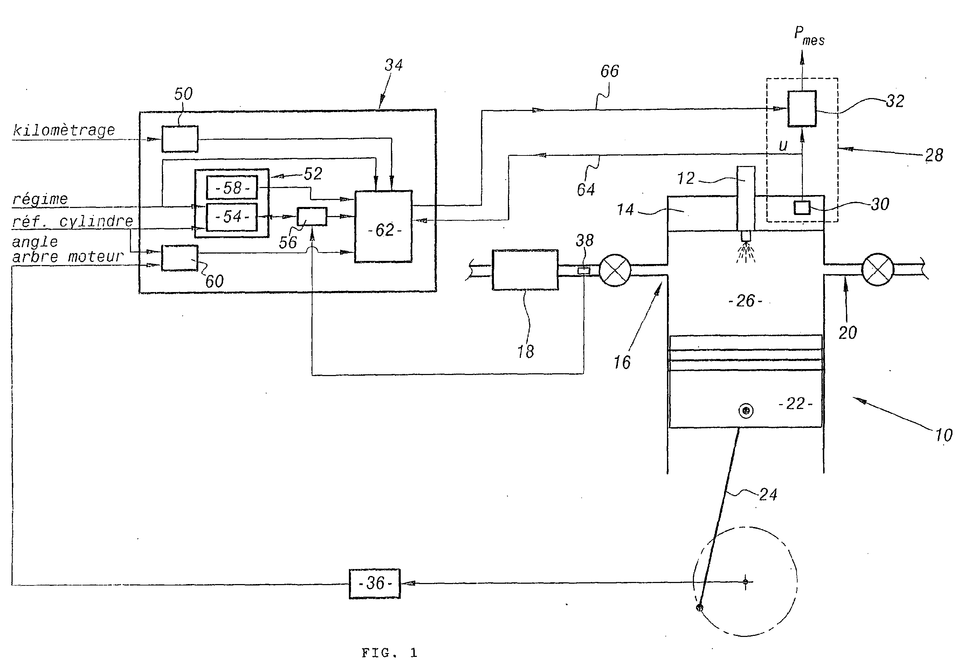

Sur la figure 1 est représenté de manière schématique un cylindre 10 d'un moteur Diesel.
Le cylindre 10 du moteur est équipé d'un injecteur 12 en carburant monté dans une culasse 14 du cylindre et comprend une voie 16 d'admission en mélange air-gaz d'échappement en provenance d'un turbocompresseur 18 raccordé à un système de recirculation des gaz d'échappement et une voie 20 d'échappement des gaz brûlés. Le volume intérieur du cylindre 10, délimité par la culasse 14 et un piston 22 raccordé à une bielle 24, définit une chambre de combustion 26 de volume variable en fonction de l'angle vilebrequin du cylindre 10.

Le cylindre 10 du moteur est associé à une chaîne d'acquisition 28 de la pression dans le cylindre qui mesure la pression dans la chambre de combustion 26 du cylindre, par exemple pour des besoins de contrôle du fonctionnement du moteur.

Cette chaîne d'acquisition 28 de la pression comprend un capteur 30 de pression cylindre qui délivre un signal U dépendant de la pression dans le cylindre et des moyens 32 de conditionnement qui conditionnent le signal U délivré par le capteur.

Le capteur 30 de pression comprend, par exemple, un élément piézoélectrique et est monté sur ou dans la culasse 14 du cylindre. Ce capteur 30 délivre le signal U en fonction de la déformation que l'élément piézoélectrique subit du fait de la variation de pression dans la chambre de combustion 26 du cylindre.

Les moyens 32 de conditionnement sont propres à réaliser un traitement du signal U qu'ils reçoivent en entrée et fournissent en sortie le signal $P_{mes}$ selon la relation :

$$P_{mes} = A \times U + P_{offset} \qquad (1A)$$

où $P_{offset}$ est un décalage pour le capteur, et A est un gain pour le capteur.

Une unité 34 de traitement d'informations reçoit en entrée une mesure de l'angle de l'arbre moteur d'un capteur 36 de l'angle de l'arbre moteur, par exemple un capteur magnétique à effet Hall pourvu d'une roue dentée associé à l'arbre moteur. L'unité 34 de traitement d'informations comporte en outre des entrées pour la valeur du régime du moteur délivrée par un capteur de régime (non représenté), et le nombre de kilomètres parcourus par le véhicule automobile.

L'unité 34 de traitement d'informations reçoit également en entrée une mesure de la pression de suralimentation $P_{sural}$ d'un capteur 38 de pression de suralimentation placé en sortie du turbocompresseur 18 ainsi que le signal U délivré par le capteur 30 de pression.

Cette unité 34 de traitement d'informations est adaptée pour déterminer des valeurs du gain A et du décalage $P_{offset}$ en mettant en oeuvre un algorithme utilisant des valeurs du régime, du signal U délivré par le capteur, de la pression de suralimentation $P_{sural}$, de l'angle de l'arbre moteur et du nombre de kilomètres parcourus par le véhicule automobile, comme cela sera expliqué plus en détail par la suite.

A cet effet, elle comprend des moyens 50 de déclenchement propres à déclencher la détermination du gain A en fonction du nombre de kilomètres parcourus.

L'unité 34 de traitement d'informations comprend également une mémoire 52 non volatile. Cette mémoire 52 comprend une table 54 de correspondance qui délivre une valeur prédéterminée d'un coefficient $\alpha$ de remplissage, liant la masse d'air admise dans le cylindre à la pression dans le collecteur d'admission du moteur, en fonction de la référence du cylindre pour lequel la chaîne d'acquisition de la pression associée est calibrée, et de la valeur du régime du moteur.

La mémoire 52 est raccordée à des moyens 56 de détermination d'une valeur de pression de référence $P_0$ de la phase de compression pure du cycle du cylindre en fonction de la valeur mesurée de la pression de suralimentation $P_{sural}$ et de la valeur sélectionnée du coefficient de remplissage $\alpha$. La mémoire 52 comprend également une liste de paramètres 58 de détermination utilisés pour la détermination des valeurs du gain A et du décalage $P_{offset}$.

Des moyens 60 de détermination de l'angle vilebrequin de l'unité 34 de traitement d'informations ont pour entrée la valeur mesurée de l'angle de l'arbre moteur délivré par le capteur 36 de l'angle de l'arbre moteur et délivrent, en fonction de la référence du cylindre, une valeur de l'angle vilebrequin, de manière connue en soi.

L'unité 34 de traitement d'informations comprend par ailleurs des moyens 62 de détermination des paramètres de conditionnement raccordés à des moyens 64 de recueil du signal U délivré par le capteur de pression 30. Les moyens 62 de détermination reçoivent en outre en entrée les sorties des moyens 50 de déclenchement, de la mémoire 52, des moyens 56 de détermination de la pression de référence, et des moyens 60 de détermination de l'angle de vilebrequin du cylindre.

Ces moyens 62 de détermination sont adaptés pour déterminer les valeurs des paramètres de conditionnement A et $P_{offset}$ selon un modèle thermodynamique polytropique de la pression dans la chambre de combustion du cylindre selon la relation :

$$P(\theta) = P_0 \left( \frac{V_0}{V(\theta)} \right)^{\gamma} \qquad (1B)$$

où $V_0$ est un volume de la chambre de combustion pour une valeur prédéterminée de l'angle vilebrequin de la phase de compression pure du cycle du cylindre, $P_0$ est une valeur prédéterminée de la pression dans la chambre de combustion pour la valeur prédéterminée de l'angle vilebrequin, $\gamma$ est un coefficient polytropique, $V(\theta)$ est le volume de la chambre de combustion pour la valeur de l'angle vilebrequin $\theta$, et $P(\theta)$ est la valeur théorique de la pression dans la chambre de combustion pour la valeur de l'angle vilebrequin $\theta$.

Comme il est possible de le constater, en recevant en entrée une valeur pression de référence $P_0$ de la phase de compression pure d'un cycle de cylindre et la valeur de l'angle vilebrequin qui détermine de manière certaine le volume de la chambre de combustion, les moyens 62 de détermination déterminent de manière théorique la valeur de la pression dans la chambre de combustion pour un point quelconque du cycle de compression pure de ce cycle pour le cylindre.

En se fondant sur la connaissance de la valeur théorique de la pression dans la chambre de combustion du cylindre, les moyens 62 de détermination sont propres à déterminer des valeurs du gain et du décalage selon les relations :

$$A = \frac{1}{M}\sum_{j=1}^{M} P_0(j) * \frac{\left(\dfrac{V_0}{\dfrac{1}{N}\sum_{i=1}^{N}V(\theta_2^i)}\right)^{\gamma} - \left(\dfrac{V_0}{\dfrac{1}{Q}\sum_{k=1}^{Q}V(\theta_1^k)}\right)^{\gamma}}{\dfrac{1}{N}\sum_{i=1}^{N}U(\theta_2^i,j) - \dfrac{1}{Q}\sum_{k=1}^{Q}U(\theta_1^k,j)} \qquad (2)$$

$$P_{offset} = P_0(j) * \frac{\left(\dfrac{V_0}{\dfrac{1}{R}\sum_{i=1}^{R}V(\theta_3^i)}\right)^{\gamma}*\dfrac{1}{S}\sum_{k=1}^{S}U(\theta_4^k,j) - \left(\dfrac{V_0}{\dfrac{1}{S}\sum_{k=1}^{S}V(\theta_4^k)}\right)^{\gamma}*\dfrac{1}{R}\sum_{i=1}^{R}U(\theta_3^i,j)}{\dfrac{1}{S}\sum_{k=1}^{S}U(\theta_4^k,j) - \dfrac{1}{R}\sum_{i=1}^{R}U(\theta_3^i,j)} \qquad (3)$$

$$P_0(j) = \alpha(RPM(j), ref.\_cylindre) \times P_{sural}(j) \qquad (4)$$

où:

- M, N, Q, R et S sont des nombres prédéterminés, mémorisés dans la liste de paramètres 58 de la mémoire 52 ;

- $\left\{\theta_1^k ; k = 1,...,Q\right\}$ est un ensemble prédéterminé de valeurs d'angle vilebrequin compris dans une première fenêtre de valeurs d'angle vilebrequin de la phase de compression pure du cycle du cylindre mémorisé dans la liste de paramètres 58 de la mémoire 52 ;

- $\left\{V(\theta_1^k) ; k = 1,...,Q\right\}$ est l'ensemble de valeurs du volume de la chambre de combustion 26 pour l'ensemble des valeurs d'angle vilebrequin compris dans la première fenêtre de la phase de compression pure du cycle du cylindre, cet ensemble de valeurs de volume étant mémorisé dans la liste de paramètres 58 de la mémoire 52 ;

- $\left\{\theta_2^i; i=1,...,N\right\}$ est un ensemble prédéterminé de valeurs d'angle vilebrequin compris dans une seconde fenêtre de valeurs d'angle vilebrequin de la phase de compression pure du cycle du cylindre mémorisé dans la liste de paramètres 58 de la mémoire 52 ;

- $\left\{V(\theta_2^i); i=1,...,N\right\}$ est l'ensemble de valeurs du volume de la chambre de combustion 26 pour l'ensemble des valeurs d'angle vilebrequin compris dans la seconde fenêtre de la phase de compression pure du cycle du cylindre, cet ensemble de valeurs de volume étant mémorisé dans la liste de paramètres 58 de la mémoire 52 ;

- $\left\{\theta_3^i; i=1,...,R\right\}$ est un ensemble prédéterminé de valeurs d'angle vilebrequin compris dans une troisième fenêtre de valeurs d'angle vilebrequin de la phase de compression pure du cycle du cylindre mémorisé dans la liste de paramètres 58 de la mémoire 52 ;

- $\left\{V(\theta_3^i); i=1,...,R\right\}$ est l'ensemble de valeurs du volume de la chambre de combustion 26 pour l'ensemble des valeurs d'angle vilebrequin compris dans la troisième fenêtre de la phase de compression pure du cycle du cylindre, cet ensemble de valeurs de volume étant mémorisé dans la liste de paramètres 58 de la mémoire 52 ;

- $\left\{\theta_4^k; k=1,...,S\right\}$ est un ensemble prédéterminé de valeurs d'angle vilebrequin compris dans une quatrième fenêtre de valeurs d'angle vilebrequin de la phase de compression pure du cycle du cylindre mémorisé dans la liste de paramètres 58 de la mémoire 52 ;

- $\left\{V(\theta_4^k); k=1,...,S\right\}$ est l'ensemble de valeurs du volume de la chambre de combustion 26 pour l'ensemble des valeurs d'angle vilebrequin compris dans la quatrième fenêtre de la phase de compression pure du cycle du cylindre, cet ensemble de valeurs de volume étant mémorisé dans la liste de paramètres 58 de la mémoire 52 ;

- $\left\{U(\theta_1^k, j); k=1,...,Q\right\}$ est l'ensemble des valeurs du signal délivré par le capteur de pression cylindre 30 lors du j$^{ème}$ cycle du cylindre pour l'ensemble des valeurs d'angle vilebrequin compris dans la première fenêtre de la phase de compression pure du cycle du cylindre;

- $\left\{U(\theta_2^i, j); i=1,...,N\right\}$ est l'ensemble des valeurs du signal délivré par le capteur de pression cylindre 30 lors du j$^{ème}$ cycle du cylindre pour l'ensemble des valeurs d'angle vilebrequin compris dans la seconde fenêtre de la phase de compression pure du cycle du cylindre;

- $\left\{U(\theta_3^i, j); i=1,...,R\right\}$ est l'ensemble des valeurs du signal délivré par le capteur de pression cylindre 30 lors du j$^{ème}$ cycle du cylindre pour l'ensemble des valeurs d'angle vilebrequin compris dans la troisième fenêtre de la phase de compression pure du cycle du cylindre;

- $\left\{U(\theta_4^k, j); k=1,...,S\right\}$ est l'ensemble des valeurs du signal délivré par le capteur de pression cylindre 30 lors du j$^{ème}$ cycle du cylindre pour l'ensemble des valeurs d'angle vilebrequin compris dans la quatrième fenêtre de la phase de compression pure du cycle du cylindre;

- RPM(j) est la valeur du régime du moteur lorsque l'angle vilebrequin correspond au point mort bas du j$^{ème}$ cycle du cylindre, ref._cylindre est la référence du cylindre, $\alpha$(RPM(j),ref._cylindre) est une valeur du coefficient de remplissage de la table de correspondance 54 déterminée en fonction de la valeur du régime RPM(j) et de la référence du cylindre ref._cylindre et $P_0$ (j) = $\alpha$(RPM(j), ref._cylindre) x $P_{sural}$ (j) est la pression de référence pour le j$^{ème}$ cycle du cylindre égale à la valeur $\alpha$(RPM(j),ref._cylindre) multipliée par la valeur de la pression de suralimentation $P_{sural}$ (j) déterminée lorsque l'angle vilebrequin correspond au point mort bas du j$^{ème}$ cycle du cylindre.

Les valeurs ainsi déterminées sont fournies à des moyens 66 de modification des paramètres de conditionnement des moyens 32 de conditionnement de la chaîne d'acquisition de la pression 28 dans le cylindre pour la mise à jour de la valeur des paramètres de conditionnement dans les moyens 32 de conditionnement.

Il est à noter que de nombreuses variations peuvent être envisagées par l'homme du métier pour déterminer une valeur du gain A et une valeur du décalage $P_{offset}$ en se fondant sur les relations (1A) et (1B). Les relations (2) et (3) ci-dessus correspondent au mode préféré de réalisation du système selon l'invention. Cependant d'autres relations peuvent être utilisées. Par exemple, en posant N=Q et R=S, il est possible de calculer la valeur du gain A et du décalage $P_{offset}$ selon les relations :

$$A = \frac{1}{N \times M} \sum_{j=1}^{M} P_0(j) \sum_{i=1}^{N} \frac{\left(\dfrac{V_0}{V(\theta_2^i, j)}\right)^{\gamma} - \left(\dfrac{V_0}{V(\theta_1^i, j)}\right)^{\gamma}}{U(\theta_2^i, j) - U(\theta_1^i, j)}$$

$$P_{offset} = \frac{1}{T \times R} \sum_{j=1}^{T} P_0(j) \sum_{i=1}^{R} \frac{\left(\dfrac{V_0}{V(\theta_4^i, j)}\right)^{\gamma} \times U(\theta_3^i, j) - \left(\dfrac{V_0}{V(\theta_3^i, j)}\right)^{\gamma} \times U(\theta_4^i, j)}{U(\theta_4^i, j) - U(\theta_3^i, j)}$$

où T est un nombre prédéterminé.

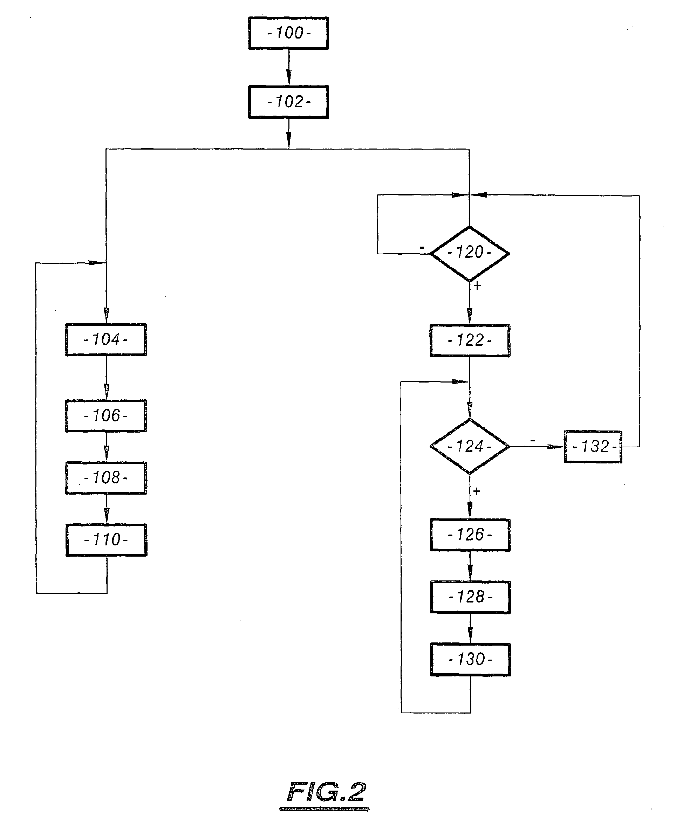

Le fonctionnement de l'unité de traitement d'informations est ci-après expliqué en relation avec l'organigramme de la figure 2.

A la suite du premier démarrage du véhicule automobile lors d'une étape 100, une stratégie de calibrage de la chaîne d'acquisition de la pression dans le cylindre est initialisée. L'initialisation de la stratégie de calibrage consiste notamment à déterminer la périodicité du calibrage de la chaîne d'acquisition et à sélectionner les valeurs d'angles vilebrequin utilisées pour déterminer les valeurs du gain et du décalage. Un mode de fonctionnement préféré du système de calibrage selon l'invention consiste à déterminer de manière continue le décalage $P_{offset}$, c'est-à-dire déterminer une valeur du décalage pour chaque cycle du cylindre, et de manière régulière le gain A. Ainsi, cette initialisation consiste en outre à choisir le nombre de kilomètres parcourus par le véhicule automobile entre deux déterminations de la valeur du gain A.

Dans une étape 102 suivante, déclenchée successivement au démarrage du moteur, les valeurs des paramètres de la liste des paramètres 58, utilisés pour la détermination des paramètres de conditionnement selon les relations (2) et (3), sont chargées dans les moyens 62 de détermination depuis la liste des paramètres 58 de la mémoire 52.

La valeur de chacun des paramètres a par exemple été calculée de manière optimale lors d'études antérieures. Chacune des valeurs d'angle a ainsi été déterminée pour optimiser le rapport signal sur bruit de la valeur correspondante du signal délivré par le capteur 30 et de telle sorte que les valeurs d'angle vilebrequin $\theta_1^k$, $\theta_2^i$ soient choisies au début de la phase de compression pure du cycle du cylindre et les valeurs d'angle vilebrequin $\theta_3^i$, et $\theta_4^k$ soient choisies en fin de phase de compression pure du cycle du cylindre.

De plus, il est à noter qu'aux environs du point mort bas du cycle du cylindre qui définit le début de la phase de compression pure, la culasse du cylindre est déformée de façon significative par les variations de pression engendrées par la combustion du carburant dans les cylindres voisins. Par conséquent, un capteur de pression du type à élément piézoélectrique délivre un signal présentant une composante significative qui dépend de la combustion dans les cylindres voisins. Dans le cas d'un capteur de ce type, de manière avantageuse, les valeurs d'angle vilebrequin $\theta_1^k$, $\theta_2^i$, $\theta_3^i$, et $\theta_4^k$ sont par conséquent également déterminées pour appartenir à une plage de valeurs d'angle pour laquelle le signal délivré par le capteur 30 est non bruité par la combustion dans les cylindres voisins.

Une fois l'initialisation des paramètres de détermination terminée, dans une étape 104, une première mémoire tampon (non représentée) des moyens 62 de détermination est initialisée.

Dans une étape 106 suivante, les moyens 56 de détermination de la pression $P_0$ de référence interrogent la table 54 de correspondance qui leur délivre la valeur du coefficient de remplissage en fonction de la référence du cylindre et de la valeur du régime lorsque l'angle vilebrequin correspond au point mort bas du cycle du cylindre. Les moyens 56 multiplient alors cette valeur du coefficient de remplissage par la valeur de la pression de suralimentation correspondant au point mort bas pour former la pression $P_0$ de référence pour le cycle du cylindre courant, conformément à la relation (3). Cette valeur de pression de référence est alors fournie aux moyens 62 de détermination pour être mémorisée dans la première mémoire tampon pour un usage ultérieur. Dans une étape 108 subséquente à l'étape 106, les moyens 62 de détermination mémorisent dans la première mémoire tampon les valeurs du signal délivré par le capteur 30 de pression dans le cylindre, recueillies par les moyens 64 de recueil , pour ce cycle de cylindre courant et correspondant aux valeurs d'angle vilebrequin fournies par la liste 58 de paramètres de détermination de la mémoire 52.Une fois le cycle du cylindre courant terminé, dans une étape 110 , les moyens 62 de détermination calculent la valeur du décalage $P_{offset}$ selon la relation (3) en fonction des valeurs $P_0$ et des valeurs du signal délivré par le capteur mémorisées dans la première mémoire tampon. Cette valeur du décalage $P_{offset}$ est alors fournie aux moyens 66 de modification des paramètres de conditionnement des moyens 32 de conditionnement pour la mise à jour de la valeur de décalage de ceux-ci.. L'étape 110 est alors rebouclée sur l'étape d'initialisation 104 de la première mémoire tampon.

Comme il est possible de le constater, la détermination du décalage est effectuée de manière continue, c'est-à-dire pour chaque cycle du cylindre, ce qui rend ainsi possible la détection et la compensation continues des dérives du signal délivré par le capteur 30.

Dans une étape 120, successive à l'étape 102 d'initialisation, les moyens 50 de déclenchement mettent en oeuvre un test pour savoir si le nombre de kilomètres parcourus depuis la dernière détermination de la valeur du gain A est supérieure ou égale à une valeur prédéterminée de kilomètres parcourus.

Si le résultat de ce test est négatif, les moyens 50 de déclenchement continuent de scruter l'occurrence d'un tel événement.

Si le résultat de ce test est positif, dans une étape 122, les moyens 50 de déclenchement déclenchent la détermination du gain A. Un second compteur de cycles des moyens 62 de détermination (non représenté) est alors initialisé à 1 et une seconde mémoire tampon (non représentée) des moyens 62 de détermination est initialisée.

Dans une étape 124 suivante, les moyens 62 de détermination mettent en oeuvre un test pour savoir si la valeur du compteur de cycles de cylindre est inférieure ou égale à M. Si le résultat de ce test est positif, une valeur de pression de référence $P_0$ pour le cycle de cylindre courant est alors déterminée et mémorisée dans la seconde mémoire tampon de manière analogue à celle décrite ci-dessus pour la détermination de la valeur du décalage.

De même, dans une étape 128, les valeurs du signal délivré par le capteur 30, pour ce cycle de cylindre courant, correspondant aux valeurs d'angle vilebrequin mémorisées dans la liste de paramètres 58 pour la détermination du gain A, sont recueillies par les moyens 64 de recueil et mémorisées dans la seconde mémoire tampon pour un usage ultérieur.

Dans une étape 130, le second compteur de cycles de cylindre est incrémenté d'un pas d'incrément de un à la fin du cycle de cylindre, et l'étape 130 est rebouclée sur l'entrée de l'étape 124.

Si le résultat du test sur la valeur du second compteur de cycles du cylindre est négatif, dans une étape 132, la valeur du gain A est déterminée selon la relation (2) en fonction des valeurs de pression de référence et des valeurs du signal délivré par le capteur mémorisées dans la seconde mémoire tampon. La valeur nouvellement déterminée du gain A est alors fournie aux moyens 66 de modification des paramètres de conditionnement des moyens 32 de conditionnement pour la mise à jour de la valeur du gain de ceux-ci.. L'étape 132 est ensuite rebouclée sur l'entrée de l'étape 120.

Comme il est possible de le constater, le gain est déterminé de façon régulière de sorte que les dérives du capteur, notamment la dérive de sa sensibilité, sont corrigées de manière régulière par la détermination régulière de la valeur du gain A des moyens de conditionnement.

Le choix des valeurs des paramètres M, N, Q,R et S dépend du savoir-faire de l'homme du métier qui détermine ces valeurs en se fondant sur un compromis entre la robustesse numérique de la détermination des paramètres de conditionnement et temps de calcul utilisé pour cette détermination.

Une valeur du coefficient de remplissage $\alpha$ est déterminée pour chaque type de cylindre et en fonction de la valeur du régime du moteur.

Un type de cylindre est notamment défini par la position de ce type de cylindre dans le moteur. En effet, en raison de sa sensibilité aux déformations de la culasse du cylindre, un capteur de pression mesurant une déformation de sa structure, ou de la structure du moteur, pour mesurer la pression dans le cylindre, délivre par conséquent un signal qui contient une composante dépendante de la déformation de la culasse du cylindre provoquée par l'inflammation du carburant dans les cylindres voisins. Comme la disposition relative des cylindres dans le moteur n'est pas symétrique, la pression de référence $P_0$ dépend de la position du cylindre dans le moteur. Cette dépendance de la pression de référence à la position du cylindre est prise en compte par le coefficient de remplissage $\alpha$, qui dépend de la position du cylindre.

De plus, il a été observé que le gain intrinsèque d'un capteur de pression varie légèrement en fonction du régime du moteur. Cette dépendance du gain intrinsèque du capteur est prise en compte par l'utilisation d'un coefficient de remplissage $\alpha$ fonction du régime du moteur. Ainsi des valeurs du coefficient de remplissage pour le type de cylindre sont déterminées pour un ensemble prédéterminé de valeurs de régime du moteur.

Bien entendu, une dépendance supplémentaire du coefficient de remplissage α vis-à-vis d'autres paramètres du moteur, par exemple la charge de celui-ci, peut être avantageusement utilisée par le système selon l'invention afin d'affiner la stratégie de calibrage du signal délivré par le capteur 30.

Les valeurs du coefficient de remplissage α sont déterminées lors d'une étude antérieure. Cette étude consiste notamment à déterminer une valeur de coefficient de remplissage pour chaque couple (type de cylindre, régime) d'un ensemble prédéterminé de couples (type de cylindre, régime). Par exemple, il peut s'agir, pour un couple (type de cylindre, régime) sélectionné, de déterminer le gain A d'une chaîne d'acquisition de la pression dans un cylindre du type sélectionné d'un moteur de test dont on connaît au préalable la valeur par une étude portant sur des capteurs de référence, par exemple $A_{ref}$. Pour cela, on procède de la manière suivante :

- calculer T valeurs $A_i$ du gain selon la relation (2) avec α = 1, M=N=Q=1, avec T très grand (par exemple 2000 cycles de cylindre), le régime et la charge du moteur de test étant constants lors des T cycles, de sorte que la pression de suralimentation pour l'angle vilebrequin correspondant au point mort bas est constante pour les T cycles ; les valeurs d'angle vilebrequin pour le calcul de ces valeurs de gain étant choisies de la manière précédemment décrite ;
- effectuer une moyenne glissante sur une fenêtre de L (par exemple L=10) valeurs $A_i$ du gain, obtenant ainsi des valeurs $\tilde{A}_i$ estimées moyennes;
- déterminer la valeur de α pour le couple (type de cylindre, régime) sélectionné comme étant la valeur qui annule l'erreur moyenne d'estimation, c'est-à-dire une valeur α telle que

$$\sum_{i=1}^{T}\left(A_{ref} - \alpha \times \tilde{A}_i\right)^2 = 0.$$

Suivant un autre mode de réalisation, le régime du moteur est constant lors de la détermination du gain et du décalage, de sorte que la pression de référence pour le cylindre est constante. Ce mode de réalisation évite ainsi d'avoir à calculer à chaque cycle du cylindre une nouvelle valeur de la pression de référence.

Egalement, plutôt que de déclencher la détermination du gain lorsqu'un nombre prédéterminé de kilomètres ont été parcourus depuis le dernier calibrage du gain, le calibrage du gain peut être déclenché par les moyens 50 de déclenchement à intervalles de temps réguliers, par exemple à chaque fois que la durée écoulée depuis la dernière détermination du gain est supérieure ou égale à une valeur de seuil prédéterminée de durée.

D'autres modes de calcul du gain et de l'offset des moyens de conditionnement, se fondant sur l'utilisation du modèle polytropique de la phase de compression pure du cycle du cylindre, sont possibles. Il est ainsi possible d'utiliser un algorithme des moindres carrées, un estimateur, ou autres.

**Revendications**

1. Système de calibrage d'une chaîne d'acquisition (28) de la pression dans un cylindre (10) d'un moteur Diesel pour véhicule automobile, du type comportant un capteur de pression cylindre (30) associé au cylindre et des moyens de conditionnement (32) du signal délivré par le capteur (30) en fonction de paramètres de conditionnement, **caractérisé en ce qu'**il comprend :

   - des moyens (64) de recueil du signal délivré par le capteur de pression cylindre (30) ;
   - une unité (34) de traitement d'informations adaptée pour déterminer les valeurs des paramètres de conditionnement en fonction d'un modèle thermodynamique polytropique de l'évolution de la pression dans le cylindre lors, d'une pression de référence de la phase de compression pure du cycle du cylindre et du signal délivré par le capteur de pression (30) recueilli par les moyens (64) de recueil; et
   - des moyens (66) de modification des valeurs des paramètres de conditionnement dans la chaîne d'acquisition (28) en fonction des valeurs des paramètres de conditionnement déterminées par l'unité (34) de traitement d'informations **caractérisé en ce que** la pression de référence est une pression de la phase de compression pure du cycle du cylindre.

2. Système selon la revendication 1, **caractérisé en ce que** l'unité (34) de traitement d'information comporte des moyens (62) de détermination adaptés pour déterminer la valeur des paramètres de conditionnement en fonction de valeurs de pression dans la chambre de combustion d'un modèle polytropique de compression pure du cycle du cylindre selon la relation :

$$P(\theta) = P_0 \left( \frac{V_0}{V(\theta)} \right)^{\gamma}$$

où $\theta$ est une valeur de l'angle vilebrequin du cylindre, $V_0$ est le volume de la chambre de combustion (26) du cylindre (10) pour une valeur prédéterminée de l'angle vilebrequin de la phase de compression pure du cycle du cylindre, $P_0$ est une pression de référence prédéterminée dans la chambre de combustion (26) pour la valeur prédéterminée de l'angle vilebrequin, $\gamma$ est un coefficient polytropique, $V(\theta)$ est le volume de la chambre de combustion (26) pour la valeur de l'angle vilebrequin du cylindre $\theta$, et $P(\theta)$ est la pression dans la chambre de combustion (26) pour la valeur de l'angle vilebrequin du cylindre $\theta$.

3. Système selon la revendication 2, **caractérisé en ce que** les moyens de détermination (62) sont adaptés pour déterminer les paramètres de conditionnement d'un modèle de conditionnement du signal délivré par le capteur de pression (30) dans le cylindre (10) selon la relation :

$$P_{mes} = A \times U + P_{offset}$$

où $U$ est le signal délivré par le capteur de pression (30), $P_{offset}$ est un décalage, $A$ est un gain, et $P_{mes}$ est la pression cylindre mesurée délivrée par les moyens de conditionnement (32).

4. Système selon les revendications 2 et 3, **caractérisé en ce que** les moyens de détermination (62) sont adaptés pour déterminer le gain $A$ et le décalage $P_{offset}$ des moyens de conditionnement selon les relations :

$$A = \frac{1}{M} \sum_{j=1}^{M} P_0(j) * \frac{\left( \frac{V_0}{\frac{1}{N} \sum_{i=1}^{N} V(\theta_2^i)} \right)^{\gamma} - \left( \frac{V_0}{\frac{1}{Q} \sum_{k=1}^{Q} V(\theta_1^k)} \right)^{\gamma}}{\frac{1}{N} \sum_{i=1}^{N} U(\theta_2^i, j) - \frac{1}{Q} \sum_{k=1}^{Q} U(\theta_1^k, j)}$$

$$P_{offset} = P_0(j) * \frac{\left( \frac{V_0}{\frac{1}{R} \sum_{i=1}^{R} V(\theta_3^i)} \right)^{\gamma} * \frac{1}{S} \sum_{k=1}^{S} U(\theta_4^k, j) - \left( \frac{V_0}{\frac{1}{S} \sum_{k=1}^{S} V(\theta_4^k)} \right)^{\gamma} * \frac{1}{R} \sum_{i=1}^{R} U(\theta_3^i, j)}{\frac{1}{S} \sum_{k=1}^{S} U(\theta_4^k, j) - \frac{1}{R} \sum_{i=1}^{R} U(\theta_3^i, j)}$$

où :

- M, N, Q, R et S sont des nombres prédéterminés;

- $\left\{ \theta_1^k ; k = 1,...,Q \right\}$, $\left\{ \theta_2^i ; i = 1,...,N \right\}$, $\left\{ \theta_3^i ; i = 1,...,R \right\}$, et $\left\{ \theta_4^k ; k = 1,...,S \right\}$ sont des ensembles prédéterminés de valeurs d'angle vilebrequin compris respectivement dans une première, seconde, troisième et quatrième fenêtre de valeurs d'angle vilebrequin de la phase de compression pure du cycle ;

$$-\left\{V(\theta_1^k);\, k=1,...,Q\right\}, \qquad \left\{V(\theta_2^i);\, i=1,...,N\right\}, \qquad \left\{V(\theta_3^i);\, i=1,...,R\right\},\ \text{et}$$

$$\left\{V(\theta_4^k);\, k=1,...,S\right\}\ \text{sont les ensembles de valeurs du volume de la chambre de combustion (26) pour les}$$

ensembles des valeurs d'angle vilebrequin compris dans la première, seconde, troisième et quatrième fenêtre de la phase de compression pure du cycle du cylindre respectivement ;

$$-\left\{U(\theta_1^k, j);\, k=1,...,Q\right\}, \quad \left\{U(\theta_2^i, j);\, i=1,...,N\right\}, \quad \left\{U(\theta_3^i, j);\, i=1,...,R\right\},\ \text{et}$$

$$\left\{U(\theta_4^k, j);\, k=1,...,S\right\}\ \text{sont les ensembles de valeurs du signal délivré par le capteur de pression cylindre}$$

(30) lors du j-ème cycle du cylindre pour les ensembles de valeurs d'angle vilebrequin compris dans la première, seconde, troisième et quatrième fenêtre de la phase de compression pure du cycle du cylindre respectivement; et
- $P_0(j)$ est la pression de référence pour le j-ème cycle du cylindre.

5.  Système selon la revendication 4, **caractérisé en ce que** les valeurs $\theta_1^i$ et $\theta_3^i$ sont des valeurs de l'angle vilebrequin du début de la phase de compression pure du cycle du cylindre, et les valeurs $\theta_2^i$ et $\theta_4^k$ sont des valeurs de l'angle vilebrequin de la fin de la phase de compression pure du cycle du cylindre.

6.  Système selon l'une quelconque des revendications 4 et 5, **caractérisé en ce que** chacune des valeurs de l'angle vilebrequin $\theta_1^k$, $\theta_2^i$, $\theta_3^i$, et $\theta_4^k$ est déterminée pour optimiser le rapport signal sur bruit du signal délivré par le capteur de pression (30) pour la valeur de l'angle vilebrequin.

7.  Système selon l'une quelconque des revendications 2 à 6, **caractérisé en ce que** le moteur est équipé de moyens de recirculation des gaz d'échappement raccordé à un turbocompresseur (18), et **en ce que** l'unité de traitement (34) d'informations comprend des moyens (56) de détermination de la pression de référence $P_0$ en fonction de la pression de suralimentation en sortie du turbocompresseur (18).

8.  Système selon la revendication 7, **caractérisé en ce** les moyens (56) de détermination de la pression de référence $P_0$ sont raccordés aux moyens (62) de détermination, et sont adaptés pour déterminer la pression de référence $P_0$ selon la relation:

$$P_0 = \alpha \times P_{sural}$$

où $\alpha$ est une valeur d'un coefficient de remplissage et $P_{sural}$ est une valeur de la pression de suralimentation en sortie du turbocompresseur (18) pour l'angle vilebrequin du cylindre correspondant au point mort bas du cycle du cylindre.

9.  Système selon la revendication 8, **caractérisée en ce que** l'unité (34) de traitement d'informations comprend des moyens (54) de sélection de la valeur du coefficient de remplissage en fonction du type du cylindre et de la valeur du régime du moteur.

10. Système selon la revendication 3 et l'une quelconque des revendications 4 à 9, **caractérisé en ce que** l'unité (34) de traitement d'information comprend des moyens (50) de déclenchement raccordés aux moyens (62) de détermination adaptés pour déclencher la détermination du gain du modèle de conditionnement en fonction d'une loi prédéterminée de déclenchement de la détermination du gain du modèle de conditionnement.

11. Système selon la revendication 10, **caractérisé en ce que** les moyens (50) de déclenchement sont adaptés pour déclencher la détermination du gain du modèle de conditionnement lorsque le véhicule automobile a parcouru un nombre de kilomètres depuis la détermination précédente du gain du modèle de conditionnement supérieur ou égal à une valeur de seuil prédéterminée de kilomètres.

**12.** Système selon la revendication 10 ou 11, **caractérisé en ce que** les moyens (50) de déclenchement sont adaptés pour déclencher la détermination du gain du modèle de conditionnement lorsqu'il s'est écoulé une durée depuis la détermination précédente du gain du modèle de conditionnement supérieure ou égale à une valeur de seuil prédéterminée de durée.

**13.** Système selon la revendication 3 et l'une des revendications 4 à 12, **caractérisé en ce que** les moyens de détermination (62) sont adaptés pour déterminer en continu le décalage du modèle de conditionnement.

**14.** Système selon l'une quelconque des revendications précédentes, **caractérisé en ce que** le capteur de pression (30) est un capteur adapté pour mesurer une déformation de la structure du moteur.

**Claims**

**1.** System for calibrating a chain (28) for acquisition of a pressure in a cylinder (10) of a diesel engine for a motor vehicle, of the type comprising a cylinder pressure sensor (30) associated with the cylinder and means (32) for conditioning the signal delivered by the sensor (30) as a function of the conditioning parameters, the system comprising:

- means (64) for collecting the signal delivered by the cylinder pressure sensor (30);
- a data processing unit (34) adapted to determine the values of the conditioning parameters as a function of a polytropic thermodynamic model of the evolution of pressure in the cylinder during the pure compression phase of the cycle thereof, of a reference pressure and of the signal delivered by the pressure sensor (30) collected by the collecting means (64); and
- means (66) for modifying the values of the conditioning parameters in the acquisition chain (28) as a function of the values of the conditioning parameters determined by the data processing unit (34), **characterised in that** the reference pressure is a pressure of the pure compression phase of the cycle of the cylinder.

**2.** System according to claim 1, **characterised in that** the data processing unit (34) comprises determining means (62) adapted to determine the value of the conditioning parameters as a function of pressure values in the combustion chamber of a polytropic model of pure compression of the cycle of the cylinder according to the equation:

$$P(\theta) = P_0 \left( \frac{V_0}{V(\theta)} \right)^{\gamma}$$

where $\theta$ is a value of the crankshaft angle of the cylinder, $V_0$ is the volume of the combustion chamber (26) of the cylinder (10) for a predetermined value of the crankshaft angle of the pure compression phase of the cycle of the cylinder, $P_0$ is a predetermined reference pressure in the combustion chamber (26) for the predetermined value of the crankshaft angle, $\gamma$ is a polytropic coefficient, $V(\theta)$ is the volume of the combustion chamber (26) for the value of the crankshaft angle of the cylinder $\theta$, and $P(\theta)$ is the pressure in the combustion chamber (26) for the value of the crankshaft angle of the cylinder $\theta$.

**3.** System according to claim 2, **characterised in that** the determining means (62) are adapted to determine the conditioning parameters of a conditioning model of the signal delivered by the pressure sensor (30) in the cylinder (10) according to the equation:

$$P_{mes} = A \times U + P_{offset}$$

where U is the signal delivered by the pressure sensor (30), $P_{offset}$ is an offset, A is a gain, and $P_{mes}$ is the measured cylinder pressure delivered by the conditioning means (32).

**4.** System according to claims 2 and 3, **characterised in that** the determining means (62) are adapted to determine the gain A and the offset $P_{offset}$ of the conditioning means according to the equations:

$$A = \frac{1}{M}\sum_{j=1}^{M} P_0(j) * \frac{\left(\dfrac{V_0}{\dfrac{1}{N}\sum_{i=1}^{N} V(\theta_2^i)}\right)^{\gamma} - \left(\dfrac{V_0}{\dfrac{1}{Q}\sum_{k=1}^{Q} V(\theta_1^k)}\right)^{\gamma}}{\dfrac{1}{N}\sum_{i=1}^{N} U(\theta_2^i,j) - \dfrac{1}{Q}\sum_{k=1}^{Q} U(\theta_1^k,j)}$$

$$P_{offset} = P_0(j) * \frac{\left(\dfrac{V_0}{\dfrac{1}{R}\sum_{i=1}^{R} V(\theta_3^i)}\right)^{\gamma} * \dfrac{1}{S}\sum_{k=1}^{S} U(\theta_4^k,j) - \left(\dfrac{V_0}{\dfrac{1}{S}\sum_{k=1}^{S} V(\theta_4^k)}\right)^{\gamma} * \dfrac{1}{R}\sum_{i=1}^{R} U(\theta_3^i,j)}{\dfrac{1}{S}\sum_{k=1}^{S} U(\theta_4^k,j) - \dfrac{1}{R}\sum_{i=1}^{R} U(\theta_3^i,j)}$$

where:

M, N, Q, R and S are predetermined numbers; $\left\{\theta_1^k; k=1,...,Q\right\}$, $\left\{\theta_2^i; i=1,...,N\right\}$, $\left\{\theta_3^i; i=1,...,R\right\}$,

and $\left\{\theta_4^k; k=1,...,S\right\}$ are predetermined sets of crankshaft angle values respectively contained within a first, second, third and fourth window of crankshaft angle values of the pure compression phase of the cycle;

$\left\{V(\theta_1^k); k=1,...,Q\right\}$, $\left\{V(\theta_2^i); i=1,...,N\right\}$, $\left\{V(\theta_3^i); i=1,...,R\right\}$, and

$\left\{V(\theta_4^k); k=1,...,S\right\}$ are the sets of values of the volume of the combustion chamber (26) for sets of crankshaft angle values contained within the first, second, third and fourth window of the pure compression phase of the cycle of the cylinder, respectively;

$\left\{U(\theta_1^k,j); k=1,...,Q\right\}$, $\left\{U(\theta_2^i,j); i=1,...,N\right\}$, $\left\{U(\theta_3^i,j); i=1,...,R\right\}$, and

$\left\{U(\theta_4^k,j); k=1,...,S\right\}$ are the sets of values of the signal delivered by the cylinder pressure sensor (30) during the $j^{th}$ cycle of the cylinder for sets of crankshaft angle values contained within the first, second, third and fourth window of the pure compression phase of the cycle of the cylinder, respectively; and
$P_0(j)$ is the reference pressure for the $j^{th}$ cycle of the cylinder.

**5.** System according to claim 4, **characterised in that** the values $\theta_1^i$ and $\theta_3^i$ are values of the crankshaft angle of the start of the pure compression phase of the cycle of the cylinder, and the values $\theta_2^i$ and $\theta_4^k$ are values of the crankshaft angle of the end of the pure compression phase of the cycle of the cylinder.

6. System according to any one of claims 4 and 5, **characterised in that** each of the values of the crankshaft angle

$$\theta_1^k, \theta_2^i, \theta_3^i \text{ and } \theta_4^k$$ is determined so as to optimise the signal to noise ratio of the signal delivered by the pressure sensor (30) for the value of the crankshaft angle.

7. System according to any one of claims 2 to 6, **characterised in that** the engine is equipped with means for recycling the exhaust gases, connected to a turbocompressor (18), and **in that** the data processing unit (34) comprises means (56) for determining the reference pressure $P_0$ as a function of the turbocharging pressure at the output of the turbocompressor (18).

8. System according to claim 7, **characterised in that** the means (56) for determining the reference pressure $P_0$ are connected to the determining means (62), and are adapted to determine the reference pressure $P_0$ according to the equation:

$$P_0 = \alpha \text{ x } P_{turbo}$$

where $\alpha$ is a value of a filling coefficient and $P_{turbo}$ is a value of the turbocharging pressure at the output of the turbocompressor (18) for the crankshaft angle of the cylinder corresponding to bottom dead centre of the cylinder cycle.

9. System according to claim 8, **characterised in that** the data processing unit (34) comprises means (54) for selecting the value of the filling coefficient as a function of the type of cylinder and the value of the engine speed.

10. System according to claim 3 and any one of claims 4 to 9, **characterised in that** the data processing unit (34) comprises trigger means (50) connected to the determining means (62) adapted to trigger the determining of the gain of the conditioning model as a function of a predetermined law of triggering the determining of the gain of the conditioning model.

11. System according to claim 10, **characterised in that** the trigger means (50) are adapted to trigger the determining of the gain of the conditioning model when the motor vehicle has travelled a number of kilometres since the previous determination of the gain of the conditioning model which is greater than or equal to a predetermined threshold kilometre value.

12. System according to claim 10 or 11, **characterised in that** the trigger means (50) are adapted to trigger the determining of the gain of the conditioning model when a period of time has elapsed since the previous determination of the gain of the conditioning model which is greater than or equal to a predetermined threshold time value.

13. System according to claim 3 and one of claims 4 to 12, **characterised in that** the determining means (62) are adapted to determine the offset of the conditioning model continuously.

14. System according to any one of the preceding claims, **characterised in that** the pressure sensor (30) is a sensor adapted to measure a deformation of the structure of the engine.

**Patentansprüche**

1. System zur Kalibrierung einer Erfassungskette (28) für den Druck in einem Zylinder (10) eines Dieselmotors für ein Kraftfahrzeug, von der Art, die einen dem Zylinder zugeordneten Zylinderdrucksensor (30) und Konditionierungsmittel (32) für das durch den Sensor (30) gelieferte Signal in Abhängigkeit von Konditionierungsparametern aufweist, wobei das System umfaßt:

   - Aufnahmemittel (64) für das von dem Zylinderdrucksensor (30) gelieferte Signal;

- eine Informationsverarbeitungseinheit (34), die dazu geeignet ist, die Werte der Konditionierungsparameter in Abhängigkeit von einem polytropischen thermodynamischen Modell der Entwicklung des Drucks in dem Zylinder während der Phase der reinen Kompression des Zyklus desselben, eines Referenzdrucks und des durch den Drucksensor (30) gelieferten, durch die Aufnahmemittel (64) aufgenommenen Signals zu bestimmen; und

- Mittel (66) zur Modifizierung der Werte der Konditionierungsparameter in der Erfassungskette (28) in Abhängigkeit von den von der Informationsverarbeitungseinheit (34) bestimmten Werten der Konditionierungsparameter, **dadurch gekennzeichnet, daß** der Referenzdruck ein Druck der Phase der reinen Kompression des Zylinderzyklus ist.

2. System nach Anspruch 1, **dadurch gekennzeichnet, daß** die Informationsverarbeitungseinheit (34) Bestimmungsmittel (62) aufweist, die dazu geeignet sind, den Wert der Konditionierungsparameter in Abhängigkeit von Werten des Druckes in dem Verbrennungsraum eines polytropischen Modells der reinen Kompression des Zylinderzyklus zu bestimmen gemäß der Beziehung:

$$P(\theta) = P_0 \left( \frac{V_0}{V(\theta)} \right)^{\gamma}$$

wobei $\theta$ ein Wert des Kurbelwinkels des Zylinders ist, $V_0$ das Volumen des Verbrennungsraumes (26) des Zylinders (10) für einen vorbestimmten Wert des Kurbelwinkels der Phase der reinen Kompression des Zylinderzyklus ist, $P_0$ ein vorbestimmter Referenzdruck in dem Verbrennungsraum (26) für den vorbestimmten Wert des Kurbelwinkels ist, $\gamma$ ein polytropischer Koeffizient ist, $V(\theta)$ das Volumen des Verbrennungsraumes (26) für den Wert des Kurbelwinkels des Zylinders $\theta$ ist und $P(\theta)$ der Druck in dem Verbrennungsraum (26) für den Wert des Kurbelwinkels des Zylinders $\theta$ ist.

3. System nach Anspruch 2, **dadurch gekennzeichnet, daß** die Bestimmungsmittel (62) dazu geeignet sind, die Konditionierungsparameter eines Konditionierungsmodells des durch den Drucksensor (30) in dem Zylinder (10) gelieferten Signals zu bestimmen gemäß der Beziehung:

$$P_{mes} = A \times U + P_{offset}$$

wobei U das von dem Drucksensor (30) gelieferte Signal ist, $P_{offset}$ eine Verschiebung ist, A eine Verstärkung ist und $P_{mes}$ der gemessene, von den Konditionierungsmitteln (32) gelieferte Zylinderdruck ist.

4. System nach den Ansprüchen 2 und 3, **dadurch gekennzeichnet, daß** die Bestimmungsmittel (62) dazu geeignet sind, die Verstärkung A und die Verschiebung $P_{offset}$ der Konditionierungsmittel zu bestimmen gemäß der Beziehungen:

$$A = \frac{1}{M} \sum_{j=1}^{M} P_0(j) * \frac{\left( \dfrac{V_0}{\frac{1}{N}\sum_{i=1}^{N} V(\theta_2^i)} \right)^{\gamma} - \left( \dfrac{V_0}{\frac{1}{Q}\sum_{k=1}^{Q} V(\theta_1^k)} \right)^{\gamma}}{\frac{1}{N}\sum_{i=1}^{N} U(\theta_2^i, j) - \frac{1}{Q}\sum_{k=1}^{Q} U(\theta_1^k, j)}$$

$$P_{offset} = P_0(j) * \frac{\left(\dfrac{V_0}{\frac{1}{R}\sum\limits_{i=1}^{R}V(\theta_3^i)}\right)^{\gamma} * \dfrac{1}{S}\sum\limits_{k=1}^{S}U(\theta_4^k,j) - \left(\dfrac{V_0}{\frac{1}{S}\sum\limits_{k=1}^{S}V(\theta_4^k)}\right)^{\gamma} * \dfrac{1}{R}\sum\limits_{i=1}^{R}U(\theta_3^i,j)}{\dfrac{1}{S}\sum\limits_{k=1}^{S}U(\theta_4^k,j) - \dfrac{1}{R}\sum\limits_{i=1}^{R}U(\theta_3^i,j)}$$

wobei:

- M, N, Q, R und S vorbestimmte Zahlen sind;

- $\left\{\theta_1^k; k=1,...,Q\right\}$, $\left\{\theta_2^i; i=1,...,N\right\}$, $\left\{\theta_3^i; i=1,...,R\right\}$, und $\left\{\theta_4^k; k=1,...,S\right\}$ vorbestimmte Mengen von Kurbelwinkelwerten sind, enthalten jeweils in einem ersten, zweiten, dritten und vierten Fenster von Kurbelwinkelwerten der Phase der reinen Kompression des Zyklus;

- $\left\{V(\theta_1^k); k=1,...,Q\right\}$, $\left\{V(\theta_2^i); i=1,...,N\right\}$, $\left\{V(\theta_3^i); i=1,...,R\right\}$, und

$\left\{V(\theta_4^k); k=1,...,S\right\}$ die Mengen von Werten des Volumens des Verbrennungsraumes (26) für die Mengen der Kurbelwinkelwerte, jeweils enthalten in dem ersten, zweiten, dritten und vierten Fenster der reinen Kompressionsphase des Zyklus des Zylinders, sind;

- $\left\{U(\theta_1^k,j); k=1,...,Q\right\}$, $\left\{U(\theta_2^i,j); i=1,...,N\right\}$, $\left\{U(\theta_3^i,j); i=1,...,R\right\}$, und

$\left\{U(\theta_4^k,j); k=1,...,S\right\}$ die Mengen von Werten des Signals sind, das von dem Zylinderdrucksensor (30) während des j-ten Zylinderzyklus für die Mengen von Kurbelwinkelwerten, jeweils enthalten in dem ersten, zweiten, dritten und vierten Fenster der reinen Kompressionsphase des Zylinderzyklus, geliefert wird; und
- $P_0(j)$ der Referenzdruck für den j-ten Zylinderzyklus ist.

5. System nach Anspruch 4, **dadurch gekennzeichnet, daß** die Werte $\theta_1^i$ und $\theta_3^i$ die Werte des Kurbelwinkels am Beginn der Phase der reinen Kompression des Zylinderzyklus sind und die Werte $\theta_2^i$ und $\theta_4^k$ die Werte des Kurbelwinkels am Ende der Phase der reinen Kompression des Zylinderzyklus sind.

6. System nach einem der Ansprüche 4 und 5, **dadurch gekennzeichnet, daß** jeder der Werte des Kurbelwinkels $\theta_1^k$, $\theta_2^i$, $\theta_3^i$ und $\theta_4^k$ bestimmt ist, um das Signalzu-Rausch-Verhältnis des von dem Drucksensor (30) für den Wert des Kurbelwinkels gelieferten Signals zu optimieren.

7. System nach einem der Ansprüche 2 bis 6, **dadurch gekennzeichnet, daß** der Motor mit Abgasumwälzmitteln ausgestattet ist und mit einem Turbokompressor (18) verbunden ist, und **dadurch**, daß die Informationsverarbeitungseinheit (34) Mittel (56) zur Bestimmung des Referenzdrucks $P_0$ in Abhängigkeit von dem Aufladungsdruck am Ausgang des Turbokompressors (18) umfaßt.

8. System nach Anspruch 7, **dadurch gekennzeichnet, daß** die Mittel (56) zur Bestimmung des Referenzdrucks $P_0$ mit den Bestimmungsmitteln (62) verbunden sind und dazu geeignet sind, den Referenzdruck $P_0$ zu bestimmen

gemäß der Beziehung:

$$P_0 = \alpha \times P_{sural}$$

wobei $\alpha$ ein Wert eines Füllkoeffizienten ist und $P_{sural}$ ein Wert des Aufladungsdrucks am Ausgang des Turbokompressors (18) für den Kurbelwinkel des Zylinders ist, der dem unteren Totpunkt des Zylinderzyklus entspricht.

9. System nach Anspruch 8, **dadurch gekennzeichnet, daß** die Informationsverarbeitungseinheit (34) Mittel (54) zur Auswahl des Wertes des Füllkoeffizienten in Abhängigkeit von der Art des Zylinders und dem Wert der Drehzahl des Motors umfaßt.

10. System nach Anspruch 3 und einem der Ansprüche 4 bis 9, **dadurch gekennzeichnet, daß** die Informationsverarbeitungseinheit (34) Auslösungsmittel (50) umfaßt, die mit den Bestimmungsmitteln (62) verbunden sind und dazu geeignet sind, die Bestimmung der Verstärkung des Konditionierungsmodells in Abhängigkeit von einem vorbestimmten Gesetz der Auslösung der Bestimmung der Verstärkung des Konditionierungsmodells auszulösen.

11. System nach Anspruch 10, **dadurch gekennzeichnet, daß** die Auslösungsmittel (50) dazu geeignet sind, die Bestimmung der Verstärkung des Konditionierungsmodells auszulösen, wenn das Kraftfahrzeug eine Anzahl von Kilometern seit der vorigen Bestimmung der Verstärkung des Konditionierungsmodells durchfahren hat, die größer oder gleich einem vorbestimmten Schwellwert von Kilometern ist.

12. System nach Anspruch 10 oder 11, **dadurch gekennzeichnet, daß** die Auslösungsmittel (50) dazu geeignet sind, die Bestimmung der Verstärkung des Konditionierungsmodells auszulösen, wenn eine Zeitdauer seit der vorigen Bestimmung der Verstärkung des Konditionierungsmodells abgelaufen ist, die größer oder gleich einem vorbestimmten Schwellwert der Zeitdauer ist.

13. System nach Anspruch 3 und einem der Ansprüche 4 bis 12, **dadurch gekennzeichnet, daß** die Bestimmungsmittel (62) dazu geeignet sind, kontinuierlich die Verschiebung des Konditionierungsmodells zu bestimmen.

14. System nach einem der vorstehenden Ansprüche, **dadurch gekennzeichnet, daß** der Drucksensor (30) ein Sensor ist, der dazu geeignet ist, eine Deformation der Struktur des Motors zu messen.

FIG. 1

FIG.2